Europäisches Patentamt

European Patent Office

Office européen des brevets

(11) Publication number: **0 314 661**
**A2**

## (12) EUROPEAN PATENT APPLICATION

(21) Application number: 88850369.5

(22) Date of filing: 26.10.88

(51) Int. Cl.⁴: **G 05 D 23/13**

(30) Priority: 29.10.87 NO 874506  11.10.88 NO 884526

(43) Date of publication of application:
03.05.89 Bulletin 89/18

(84) Designated Contracting States: **DE FR GB NL SE**

(71) Applicant: **BRAATHEN, Thor Frolich**
**N-3358 N. Eggedal (NO)**

(72) Inventor: **BRAATHEN, Thor Frolich**
**N-3358 N. Eggedal (NO)**

(74) Representative: **Delmar, John-Ake**
**AB Delmar & Co Patentbyra Östermalmsgatan 45**
**S-114 26 Stockholm (SE)**

(54) **Fixture apparatus with combined shut-off valve and check valve for a hot water heater of the compressor type.**

(57) A fixture apparatus having a combined shut-off valve and check valve comprising a valve body (6) slidably disposed on a regulating stem (2) for engagement with a valve seat (5) in the fixture housing (1), and an optional mixing valve (9,17; 22,17) to be coupled into a cold water inlet pipe and hot water outlet pipe to a hot water heater of the compressor type. The fixture housing (1) has two passages with inlet and outlet openings (4, 19,12,13) for, respectively, cold water and hot water, and a transverse passage (20) therebetween with the outlet opening (12) for cold water to the hot water heater therein, said transverse passage (20) also constituting a section of the cold water passage. The transverse passage (20) is made up of a bore passing through the fixture housing (1), in which bore the combined shut-off valve and check valve (5,6,2) and optional mixing valve (9, 17; 22, 17) are disposed. The valve seat (5) for the combined valves is formed by a narrowed area provided in the transverse passage (20) between the cold water inlet (4) and the outlet opening (12) for cold water to the hot water heater. The stem (2) with the valve body (6) is inserted into the first opening (20a) of the transverse passage (20) at the hot water outlet (19), with the outer end (2a) of the stem (2) provided with threads (2b) engaging with threads (20c) in the other opening (20b) of the transverse passage (20), and with the valve body (6) resting in spring loaded contact against the valve seat (5). The interior end (2c) of the stem (2) is provided with a carrier (10) for the valve body (6). The first opening of the transverse passage (20) is closed off by a closure element (21), and the outer end (2a) of the stem (2) is provided with a regulating means (3).

FIG.1

EP 0 314 661 A2

## Description

**Fixture apparatus with combined shut-off valve and check valve for a hot water heater of the compressor type.**

The present invention relates to a fixture apparatus having a combined shut-off valve and check valve comprising a valve body slidably disposed on a regulating stem for engagement with a valve seat in the fixture housing, and an optional mixing valve to be coupled into a cold water inlet pipe and hot water outlet pipe to a hot water heater of the compressor type, wherein the fixture housing has two passages with inlet and outlet openings for, respectively, cold water and hot water, and a transverse passage therebetween with the outlet opening for cold water to the hot water heater therein, said transverse passage also constituting a section of the cold water passage.

A fixture of the type mentioned above is known from the applicant's own Norwegian patent application no. 853980, wherein a stem for the shut-off valve and check valve is disposed in the cold water inlet of the fixture while the optional mixing valve is disposed on a second stem provided in the fixture's hot water outlet. In the known fixture housing, said stems with their respective shut-off valve and check valve, and mixing valve, are inserted from the cold water inlet opening and the hot water outlet opening thereof, and the ends of the stems project out through openings in the fixture housing in extensions of said cold water- and hot water passages. This results in a fixture housing having many openings that are difficult to mold, and with respect to the stems and their valve bodies, it also results in many components that must be mounted together.

The purpose of the present invention is to provide a fixture of the type mentioned in the introductory paragraph above, having a simpler fixture housing with fewer outlets that is substantially easier to mold than the fixture housing known hitherto and which is therefore less expensive. A further objective is to enable the performance of the previously known functions of a fixture of the type mentioned above by means of fewer components.

This is achieved according to the present invention by means of the characteristic features that are disclosed in the following independent claim 1 and the subsequent dependent claims.

The fixture according to the invention will be further described in the following, with reference to the exemplary embodiments shown in the drawings, and wherein

figure 1 shows the fixture seen in section from the side according to the line I-I in figure 2,

figure 2 shows the fixture seen from above in section according to the line II-II in figure 1,

figure 3 shows the same as figure 2, but with a sealing disc between the cold water inlet and the hot water outlet, while

figure 4 shows the same with a flow passage through the disc, and

figure 5 shows the same as figure 2, but with a valve body on the interior end of the stem for manual temperature regulation or for optionally shutting off the cold mixing water.

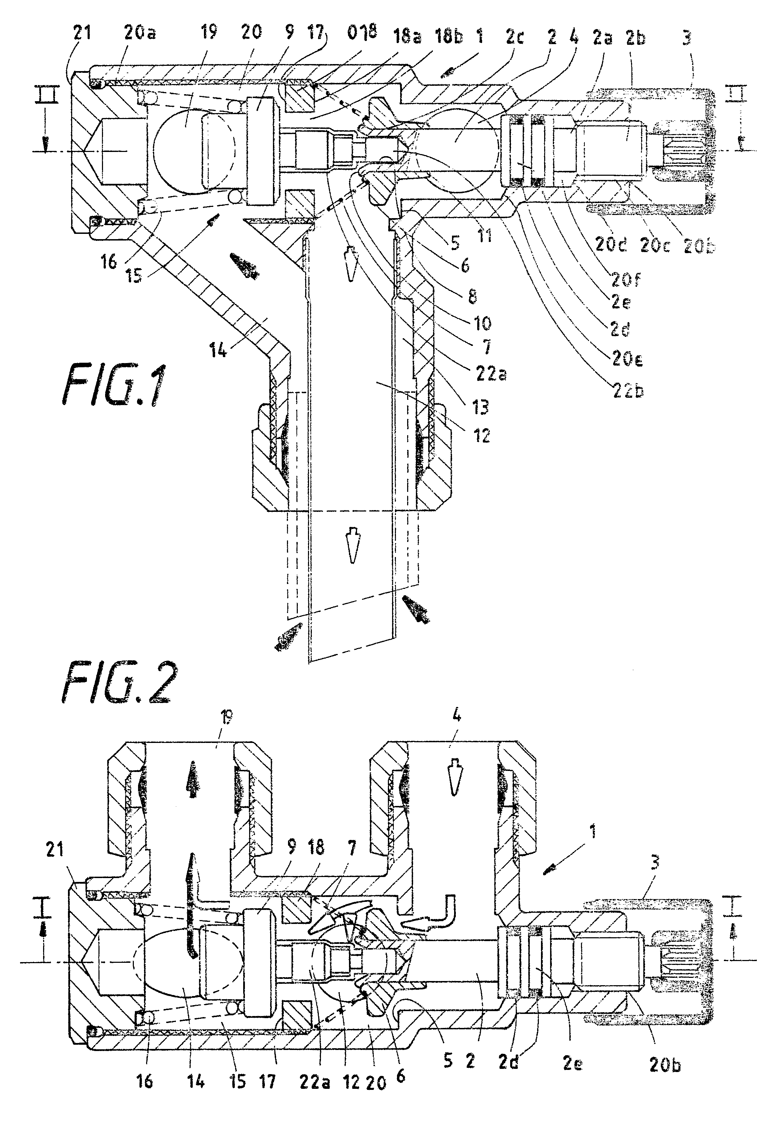

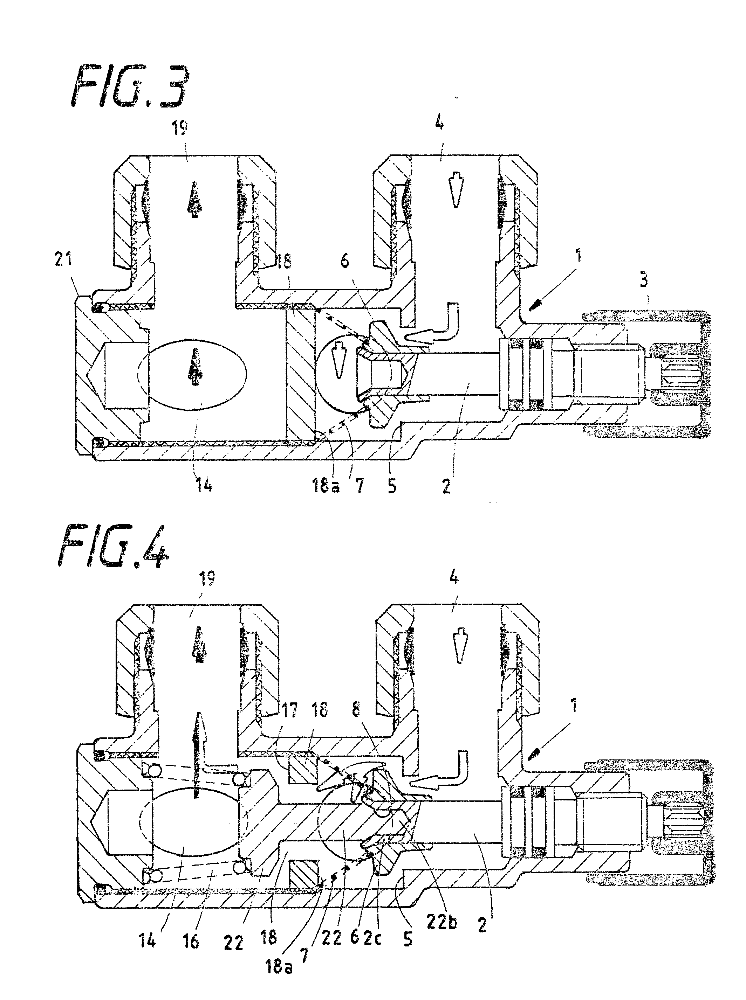

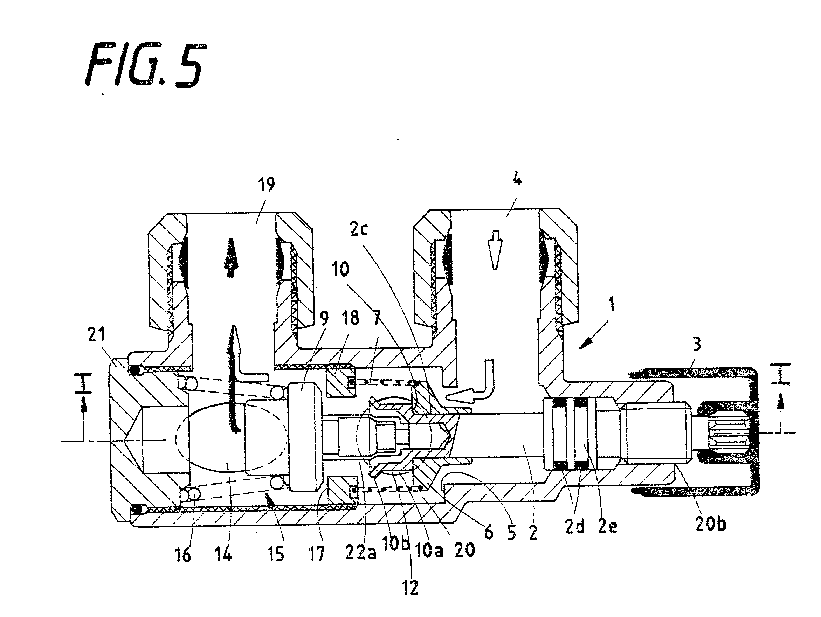

In more detailed terms, figure 1 shows a fixture housing 1 with a combined shut-off valve and check valve 5,6 together with mixing valve 9,17 of the thermostat type, which is also the subject of figure 2. Figure 3 shows a fixture housing 1 with said combined shut-off valve and check valve with sealing disc 18, whereby the mixing of hot water with cold water is prevented. Figure 4 shows the same as figure 3, with opening 18b in the disc 18 and a mixing valve body 22 whereby manual adjustment of the mixing of the hot water with cold water is achieved.

The fixture as shown in figures 1 and 2 has two passages, namely one cold water passage with inlet opening 4 and outlet upening 12 and one hot water passage with outlet opening 19 and inlet opening 13. A transverse passage 20 is provided between said cold water- and hot water passages and comprises said outlet opening 12 for cold water to the hot water heater, said transverse passage 20 also constituting a part of the cold water passage. The transverse passage 20 is made up of a bore passing through the fixture housing 1 and connecting with the cold water inlet opening 4 and the hot water outlet opening 19, and to the cold water outlet opening 12 to a hot water heater as well as hot water inlet opening 13,14 from the hot water heater.

As shown in the drawing, transverse passage 20 has three gradations 5, 20e and 20d, so that the transverse passage 20 has a stepwise diminishing cross section from its one opening 20a at the hot water outlet 19, to its other end with opening 20b at the inlet opening 4 of the cold water passage. Through the opening 20a of the transverse passage 20 there is inserted a combined shut-off valve and check valve comprising a valve body 6 slidably disposed on a regulating stem 2 for engagement with the gradation 5 which forms a valve seat in the fixture housing 1. The regulating stem 2 is provided with threads 2b at its free end which engage with threads 20c in the other opening 20b of the transverse passage. To seal off the stem 2 toward the opening 20b there are provided annular grooves 2e for sealing rings 2d that engage with a narrowed section forming a sealing chamber 20f between gradation 20e at the cold water inlet opening 4 and gradation 20d defining the threaded section 20c at the end 20b of the transverse passage 20.

The stem 2 is provided at its interior end with a carrier 10 in the form of a collar or outward deflection, to press the valve body 6 against the valve seat 5 as the stem 2 is screwed out, in order to shut off the cold water inlet. The valve body 6 is spring loaded by means of a helical spring 7 against the valve seat 5. The helical spring 7 rests against a disc 18 with a threaded circumference for engagement with a threaded section of the transverse passage 20 extending from the first opening 20a and into the cold water inlet opening 12 of the transverse passage 20. The disc 18 has a central opening 18b with a seat 17 for engagement with the valve body 9 of a mixing valve, whose valve stem 22a projects freely through the opening 18b in the washer 18 and with its free end 22b engages with an axial aperture 8 in the interior end 2c of the regulating stem 2. The valve body 9 is made up of a temperature sensor that by means of a helical spring 16 resting against the closure member 21 of the transverse passage 20, is spring tensioned in the direction of the seat 17 of the disc 18, said temperature sensor actuating the stem 22a of the valve body 9 by expansion or contraction, to enable the movement of the valve body 9 away from or in towards said seat 17.

As shown in figure 1, the illustrated fixture housing 1 is of the type having only one connection to the hot water heater, the cold water inlet 12 and the hot water outlet 13 in the fixture housing 1 being coaxial. Of course, the fixture housing may also be equipped with a separate cold water inlet 12 and hot water outlet 13, not shown here, however.

In the fixture, as shown in figures 1 and 2, the stem 2 is preferably provided with left-handed threads 2b engaging with left-handed threads 20c in the transverse passage 20. Provided that the valve body 6 is resting against the valve seat 5 and closes off the inflow of cold water through the cold water inlet opening 4, the shut-off valve may be opened in conventional manner by rotation of the wheel 3 toward the left as the stem 2 is screwed inwards and the valve body 6 is removed from the seat 5, enabling cold water to flow through the inlet opening 4 and past the valve body 6 and down into the cold water inlet opening 12 of the water heater, not shown. One thereby achieves the same rotational movement as with the opening of a conventional faucet, namely rotation toward the left. By rotating the wheel 3 toward the right, one achieves a corresponding closure of the shut-off valve 5,6. With the shut-off valve 5,6 in open position, the valve body 6 will bear resiliently against the valve seat 5 by means of the helical spring 7. As hot water is tapped, the flowing cold water will hereby shift the valve body 6 away from the valve seat 5 to open the flow passage. When the water is not being tapped, the valve body 6 is shifted back toward the valve seat 5 by the helical spring 7. By this means, the system is sealed when water is not being tapped and the valve functions as a check valve.

After the stem 2 has been screwed in far enough to establish a free passage for cold water, the cold water flows via the transverse passage 20 and the cold water inlet 12 through a pipe to the bottom of the hot water heater not shown. The hot water in the top of the hot water heater then runs out through the hot water outlet opening 13, which in the illustrated case is formed of an outer pipe 13 surrounding the inner pipe connected to the opening 12, and up through a side channel 14 to a mixing chamber 15 in the transverse passage 20, where the valve body 9 of the mixing valve, which also constitutes a temperature sensor, is clamped between the helical screw 16 and the axial aperture 8 in the interior end 2c of the regulating stem 2.

When the stem 2 is screwed down by means of the wheel 3, the mixing valve body 9 is simultaneously pressed away from the seat 17 of the ring 18 to open the flow of cold water past the temperature sensor 9 and into the mixing chamber 15 in the hot water passage. When hot water is drawn, the flow of cold mixing water through the mixing valve 9,17 can thus be adjusted by means of the wheel 3, and the temperature sensor 9 will thereafter maintain the desired temperature for the mixing water by increasing or decreasing, respectively, the passage opening between the valve body 9 and the seat 7.

All mounting of the components of the combined shut-off valve and check valve, and of the mixing valve, takes place through the largest opening 20a in the transverse passage 20. The stem 2 with sealing rings 2d and mounted valve body 6 is first inserted, to the opposite end 20b of the transverse passage 20, and the stem 2 is screwed by its threaded section 2b out through the threaded section 20c of the transverse passage, after which the wheel 3 is mounted. The helical spring 7 may either be fastened to its seat on the valve body 6 on the insertion thereof, or it may be inserted simultaneously as the threaded disc 18 is screwed into the first part of the transverse passage 20 which is provided with threads extending into the cold water outlet opening 12. Then, the mixing valve body 9 is inserted with its stem 22a in engagement with the bore 8 at the end of the regulating stem 2. The helical spring 16 may be attached to the valve body 9 on insertion, after which the closure plug 21 is screwed into the opening 20a in the transverse passage 20 for sealing thereof and to form a seat for the helical spring 16.

Of course, the mounting of the components described herein may be done in any suitable manner, with the various components, as indicated above, being inserted in groups or individually, so as to achieve as simple an assembly operation as possible.

The complete mounting of the valve components is very simple and rapid. The cleaning or the changing of the temperature sensor/valve body 9, for example, is accomplished by screwing the closure plug 21.

The temperature sensor/mixing valve body 9 is a sensor that automatically expands with heat and contracts with cold and thereby always provides the pre-set temperature as long as the hot water temperature from the compressor is higher than the temperature at which it is set. When the wax in the temperature element 9 expands within the sensor at higher temperatures, it pushes out the stem 22a. On contraction of the wax with a decrease in temperature, the stem 22a is not withdrawn, and it therefore must be pushed back by means of the helical spring 16 mentioned earlier. The helical springs 16 and the helical spring 7 both have a controlling function in addition to their pressure function, as they center the valve body 9 and valve body 6, respectively, in the transverse passage 20, thereby achieving the correct contact with their respective valve seats 17 and 5.

To reduce the price for a fixture of the above mentioned type, the temperature sensitive valve body 9 which automatically provides for temperature regulation of the outgoing hot water, may be replaced with a valve body 22 with a valve stem 22a as shown in figure 4, for manual adjustment of the mixing relationship between inflowing cold water and outflowing hot water by means of the wheel 3 on the regulating stem 2. This thus prevents, for example, the occurrence of accidents from too high a temperature of outgoing hot water. The disadvantage of this system is that the hot water flowing out through the hot water outlet 19 will always be below the water temperature of the hot water heater, as opposed to the above mentioned type having automatic temperature regulation where the flow passage for cold water to the mixing chamber 15 around the temperature sensitive valve body 9 is closed when the temperature of the outgoing hot water becomes lower than the pre-set value.

For example, with manual/mechanical temperature regulation as shown in figure 4, at a hot water heater temperature of 75°C and with the manual mixing valve 22,17 set at 55°C for hot water flowing out from the fixture's outlet opening 19, the temperature of water running out will be reduced to 35°C when the temperature of the water in the hot water heater has dropped to 55°C.

Should the user who has installed such a fixture wish to upgrade the fixture in order to obtain automatic hot water regulation, this can be done by screwing out the end plug 21 of the transverse passage 20, whereafter the mixing valve body 22 is replaced by a heat sensitive temperature element 9. One thus obtains a fixture having automatic regulation of the temperature of the outflowing water as shown in figures 1 and 2.

To further reduce the price of a fixture of the type mentioned in the introduction above, the mixing valve 22,17 may be removed completely and the disc 18 with its central opening 18b must be replaced by a disc 18 without an opening as shown in figure 3b. This provides a fixture without mixing possibilities, but the user may easily upgrade this fixture to achieve mechanical/manual mixing, as shown in figure 4, or automatic mixing, as shown in figures 1 and 2.

The same fixture housing 1 may be used for three different embodiments, such as a fixture with automatic temperature regulation, with manual/mechanical temperature regulation and without temperature regulation. The transverse passage 20 described in the above mentioned fixture housing 1 may also be used in other fixture housings having a totally different design with respect to the through-going passage, on the condition that the transverse passage 20 in the form of a bore can be made in the fixture housing transversely to the cold water- and hot water-passage, so that the regulating stem 2 with the relevant valves may be inserted from the largest opening in the transverse passage, as mentioned above.

The closure plug 21 in the transverse passage 20 may be replaced by a nipple for the mounting of a safety valve, vacuum valve, etc. Optionally, the temperature regulated hot water may flow out through the end opening 20a of the transverse passage 20 instead of through the outlet opening 19.

The system with its common stem for regulation of the shut-off valve, the check valve and temperature regulation, and combinations of automatic temperature regulation and mechanical/manual temperature regulation or no mixing of cold water and hot water, may be used in fixture housings for mounting on a hot water heater having separate coupling elements for cold water and hot water, as previously mentioned.

The fixture described above may also be used as a tapping cock connected to a cold water pipe as well as a hot water pipe from a hot water heater. It thereby becomes possible to turn on and to shut off the water and to regulate the water volume, as well as to regulate the temperature of the hot water/mixing water flowing out.

The foregoing describes a combination of a plurality of valve functions on a single regulating stem with a regulating wheel. The number of components is thereby reduced, which facilitates assembly and reduces production cost.

In a further embodiment form of the present fixture, it is possible to achieve by a simple means an additional combined function, namely a regulating- and shut-off function for the flow of cold mixing water through said transverse passage 20 between the cold water inlet 4 and the hot water outlet 19. One may thereby regulate manually the temperature of the outflowing water as it is being tapped. This may be important in cases where a mixing valve 19,17 with a temperature sensor has not been mounted on the fixture, or in the case of failure of temperature sensor.

In the embodiment form according to figure 5, the interior end 2c of the regulating stem 2 at the carrier 10 is provided with a valve body 10a which projects axially out from the end 2c of the stem 2 to engage with a valve seat 18a, which in the example described and as shown in figure 5, is formed by one side of the disc 18.

The valve body 10a is designed here as a skirt whose free edge 10b is adapted for engagement with the valve seat 18a.

In the example shown, the skirt forms an extension of the bore 8 and surrounds the valve stem 22a. Further, the valve body 10a is formed with a shoulder that constitutes the carrier 10 with its end turned away from the free edge 10b.

Said free edge 10b of the skirt is spaced at a distance from the valve seat 18 when the stem 2 is screwed in for opening of the shut-off valve 6,5 and for adjustment of the mixing valve 9,17.

When the stem 2 is screwed in further by means of the wheel 3, the valve body 10a will be brought to rest against the valve seat 18a and close off the flow of cold mixing water through the transverse passage 20. By this means it is possible to tap hot water having the same temperature as that in the vessel.

In the event that the temperature sensor of the mixing valve 9,17 should fail, the temperature of the outflowing water may be regulated by means of the stem 2 with wheel 3, which on rotation brings the valve body 10a toward or away from the valve seat 18a. The valve body 10a may in that case be adjusted so that cold mixing water flows through the transverse passage 20 in an amount sufficient to avoid outflow of excessively hot water from the hot water outlet 19, thereby to prevent scalding injuries.

After the mixing valve 9,17 has been repaired or replaced, the stem 2 may be screwed outwardly to bring the valve body 10a into a neutral position, with the mixing valve 9,17 again taking over the automatic temperature regulation.

An important result of the invention is also the fact that the fixture may be used without the mixing valve 9,17, since the temperature of the outflowing hot water may be regulated by means of the regulating stem 2 in the manner mentioned above.

Thus, the fixture may be delivered with or without the automatic mixing valve 9,17 according to need or desire.

This means that it is possible to deliver a more reasonably priced fixture with manual temperature regulation, which can later be upgraded for automatic temperature regulation merely by mounting the temperature sensitive valve body in the transverse passage 20.

**Claims**

1. A fixture apparatus having a combined shut-off valve and check valve comprising a valve body (6) slidably disposed on a regulating stem (2) for engagement with a valve seat (5) in the fixture housing (1), and an optional mixing valve (9,17; 22,17) to be coupled into a cold water inlet pipe and hot water outlet pipe to a hot water heater of the compressor type, wherein the fixture housing (1) has two passages with inlet and outlet openings (4,19,12,13) for, respectively, cold water and hot water, and a transverse passage (20) therebetween, with the outlet opening (12) for cold water to the hot water heater therein, said transverse passage (20) also constituting a section of the cold water passage, **characterized in** that the transverse passage (20) is made up of a bore passing through the fixture housing (1), wherein the combined shut-off valve and check valve (5,6,2) and the optional mixing valve (9,17; 22,17) are disposed, and wherein the valve seat (5) for the combined valves is formed by a narrowed section provided in the transverse passage (20) between the cold water inlet (4) and the outlet opening (12) for cold water to the hot water heater, the stem (2) with the valve body (6) being inserted into the first opening (20a) of the transverse passage (20) at the hot water outlet (19), with the outer end (2a) of the stem (2), provided with threads (2b), in engagement with threads (20c) in the other opening (20b) of the transverse passage (20), and with the valve body (6) in spring loaded contact with the valve seat (5), the interior end (2c) of said stem (2) being provided with a carrier (10) for the valve body (6), and that the first opening of the transverse passage (20) is closed off by a closure member (21), for example, a threaded closure plug, and that the outer end (2a) of the stem (2), as known per se, is provided with a regulating means (3), for example, a regulating wheel.

2. An apparatus according to claim 1, **characterized** in that the threaded section of the transverse passage (20) at the first opening (20a) extends past the hot water passage toward the cold water outlet opening (12) for screwing in a disc (18) having a threaded circumference to close off the transverse passage (20) between the cold water outlet opening (12) and the hot water outlet (19,13), and which forms a seat (18a) for a helical spring (7) that with one end thereof bears against the valve body (6).

3. An apparatus according to claim 2, **characterized** in that the disc (18) has a central opening (18b) with a seat (17) for engagement with the spring loaded (16) valve body (22) of a mixing valve (22,17; 9,17), said valve body, having a valve stem (22a) that projects freely through the opening (18b) in the disc (18) and with its free end (22b) engages with an axial aperture (8) in the interior end (2a) of the regulating stem (2).

4. An apparatus according to claim 3, **characterized** in that the valve body (9) of the mixing valve (9,17) is made up of a temperature sensor that by means of a helical spring (16) resting against the closure member (21) of the transverse passage (20) is spring tensioned in the direction of the seat (17) of the disc (18), said temperature sensor actuating the stem (22a) of the valve body (9) by expansion or contraction, respectively, to enable the movement of the valve body (9) away from or in towards said seat (17).

5. An apparatus according to one or more of the preceding claims, **characterized** in that the bore in the transverse passage (20) has at least one gradation, narrowing its diameter, which forms the valve seat (5).

6. An apparatus according to claim 5, **characterized** by a second gradation (20d) at the other opening (20b) of the transverse passage (20b), in which narrowed bore section the threads (20c) are formed.

7. An apparatus according to claim 6, **characterized** by a gradation (20e) in the bore of the transverse passage (20) inside the gradation (20d), for formation of a sealing chamber (20f) to engage with sealing rings (2d) placed in annular grooves (2e) on the regulating stem (2).

8. An apparatus according to claim 1, **characterized** in that a valve body (10a) is disposed on the interior end (2c) of the stem (2) and outside the carrier (10), to engage with a valve seat (18a) on a known per se narrowed area (18b) in the transverse passage (20) between the cold water outlet opening (12) and the hot water passage (19,13), for manual regulation and optional closing off of the flow of cold water through the transverse passage (20), thereby regulating the temperature of the hot water flowing out from the outlet opening (19).

9. An apparatus according to claim 8, **charac-**

**terized** in that the valve body (10a) is designed as a skirt whose free edge (10b) is adapted for engagement with the valve seat (18a).

10. An apparatus according to claim 8 or 9, wherein the narrowed area (18b) is formed by a disc (18) with a threaded circumference and central opening, screwed into the threaded section of the transverse passage (20) from the first opening (20a) thereof, one side of which disc forms a seat (18a) for a helical spring (7) which bears against the valve body (6) with its other end, and whose other side forms a seat (17) in the spring loaded (16) valve body (9) of a thermostatically controlled mixing valve (9,17), which valve body (9) is made up of a temperature sensor with its valve stem (22a) projecting freely through the opening (18b) in the disc (18) and with its free end (22b) in engagement with an axial bore (8) in the interior end (2c) of the regulating stem (2), **characterized** in that the skirt of the valve body (10a) forms an extension of the bore (8) and surrounds the valve stem (22a).

11. An apparatus according to claim 9 or 10, **characterized** in that the end of the valve body (10a) turned away from its free edge (10b) is formed with a shoulder that constitutes the carrier (10).

FIG.1

FIG.2

*FIG.3*

*FIG.4*

# FIG.5